(19)

Europäisches Patentamt
European Patent Office
Office européen des brevets

(11)　**EP 4 503 410 A1**

(12)　**EUROPEAN PATENT APPLICATION**

(43) Date of publication:
　　05.02.2025　Bulletin 2025/06

(21) Application number: 24191536.2

(22) Date of filing: 29.07.2024

(51) International Patent Classification (IPC):
　　*H02K 26/00* (2006.01)　　*H02K 33/16* (2006.01)

(52) Cooperative Patent Classification (CPC):
　　H02K 26/00; G02B 26/10; H02K 33/16

(84) Designated Contracting States:
　　AL AT BE BG CH CY CZ DE DK EE ES FI FR GB
　　GR HR HU IE IS IT LI LT LU LV MC ME MK MT NL
　　NO PL PT RO RS SE SI SK SM TR
　　Designated Extension States:
　　BA
　　Designated Validation States:
　　GE KH MA MD TN

(30) Priority:　31.07.2023　JP 2023124827

(71) Applicant: MITSUMI ELECTRIC CO., LTD.
　　Tama-Shi, Tokyo 206-8567 (JP)

(72) Inventors:
　　• OTSUKA, Yuki
　　　Tokyo, 206-8567 (JP)

• TAKAHASHI, Yuki
　Tokyo, 206-8567 (JP)
• KITAMURA, Yasutaka
　Tokyo, 206-8567 (JP)
• KAGAMI, Masaharu
　Tokyo, 206-8567 (JP)
• MASAMOTO, Kai
　Tokyo, 206-8567 (JP)

(74) Representative: Lambsdorff & Lange
　　Patentanwälte
　　Partnerschaft mbB
　　Grillparzerstraße 12A
　　81675 München (DE)

(54)　**ROTARY RECIPROCATING DRIVE ACTUATOR**

(57)　　A rotary reciprocating drive actuator includes: a movable body (20) capable of reciprocating rotation around a shaft part (24) with a magnet (36) fixed to its outer periphery; and a unit main body (4) that causes the reciprocating rotation of the movable body (20) by interaction with the magnet (36). The unit main body (4) includes: a core body (K) including magnetic poles (412, 414) extending on one straight line on both sides of the magnet (36) in a radial direction of the shaft part (24), and a magnetic path part surrounding the magnetic poles (412, 414) and the magnet and connecting the magnetic poles (412, 414); coil bodies (45) wound around the magnetic poles (412, 414) and cause the interaction by energizing; and a biasing part (48) that is disposed in a recess (480) formed in the magnetic path part at a position between the magnetic poles (412, 414) in a circumferential direction of the shaft part (24), and biases the movable body (20) toward an initial position of the reciprocating rotation.

FIG. 7

EP 4 503 410 A1

**Description**

Technical Field

The present invention relates to a rotary reciprocating drive actuator.

Background Art

As an actuator used in a scanner in a multifunction peripheral, a laser beam printer and other devices, a rotary reciprocating drive actuator has been known. Specifically, the rotary reciprocating drive actuator rotate the mirror of a scanner in a reciprocating manner to change the reflection angle of the laser beam and achieve optical scanning of a target object.

Various types of devices are known as devices using this type of rotary reciprocating drive actuator as a galvano motor, such as movable magnet type with a magnet installed on the movable part side as described in Patent Literature (hereinafter, referred to as PTL) 1 and a movable coil type with a coil installed on the mirror side.

PTL 1 describes a movable magnet type, that is, a beam scanner that includes a magnet on the mirror side and moves the magnet together with the mirror. PTL 1 describes the following: a rotating shaft with a mirror is provided between two opposing bearing walls; four permanent magnets are provided on the rotating shaft so as to be magnetized in the radial direction of the rotating shaft; and cores including magnetic poles around which coils are wound are disposed with the rotating shaft therebetween.

Citation List

Patent Literature

PTL 1
Japanese Patent No. 4727509

Summary of Invention

Technical Problem

Compared to a movable coil type, the a movable magnet type having a configuration such as in PTL 1 is less likely to adversely affect the surface condition of the mirror, the joint condition of the mirror to the rotating shaft, the shape of the mirror (including warping) and the like due to the heat generated by the coil during driving.

Although in the device described in PTL 1, the heat generated by the coil does not affect the mirror as the magnet is provided on the mirror side, the rotating shaft of the device includes four permanent magnets, and therefore, reduction of the size and height of the device is difficult.

For a rotary reciprocating drive actuator used in scanners, it has been desired that the actuator be configured to support the mirror in a cantilevered manner, depending on the reduced size of a scanner product. It has been also desired that the structure of the casing itself, in which a mirror is disposed between wall parts to be rotatably supported, be reduced in height (size reduction). As a result, such a rotary reciprocating drive actuator can be installed in a narrow space, thereby saving space.

An object of the present invention is to provide a rotary reciprocating drive actuator that can drive a movable object with high amplitude in a more stable state while achieving height reduction.

Solution to Problem

In order to achieve the above object, the present invention adopts the following configuration.

A rotary reciprocating drive actuator, including:

a movable body that includes a shaft part and is capable of reciprocating rotation around the shaft part, wherein a magnet is fixed on an outer periphery of the shaft part; and
a unit main body that causes the reciprocating rotation of the movable body by interaction with the magnet, wherein the unit main body includes

a core body that includes a pair of magnetic poles and a magnetic path part, the pair of magnetic poles extending on one straight line on both sides of the magnet in a radial direction of the shaft part, the magnetic path part surrounding the pair of magnetic poles and the magnet and connecting the pair of magnetic poles to each other, a pair of coil bodies that are respectively wound around the pair of magnetic poles and cause the interaction by energizing of the coil bodies, and

a biasing part disposed in a recess formed in the magnetic path part at a position between the magnetic poles in a circumferential direction of the shaft part, the biasing part biasing the movable body toward an initial position of the reciprocating rotation.

Advantageous Effects of Invention

The present invention can drive a movable object with high amplitude in a more stable state while achieving height reduction.

Brief Description of Drawings

FIG. 1 is a partially removed external perspective view of a scanning device including a rotary reciprocating drive actuator of Embodiment 1;
FIG. 2 is an exploded perspective view of the scanning device including the rotary reciprocating drive actuator;
FIG. 3 is a perspective view of the rotary reciprocating drive actuator;
FIG. 4 is a perspective view illustrating a bottom cover and a top cover of the rotary reciprocating drive actuator;
FIG. 5 is a cross-sectional view taken along the line A-A in FIG. 3;
FIG. 6 is an exploded perspective view illustrating a state in which a bearing cover part is removed from a drive unit of the rotary reciprocating drive actuator;
FIG. 7 illustrates a magnetic circuit configuration when the drive unit in FIG. 6 is viewed from the shaft end side;
FIG. 8 is an exploded perspective view of a core body;
FIG. 9 is an enlarged view of angle position holding parts illustrated in FIG. 7;
FIG. 10A illustrates a state in which the angle position holding part is attached to a recess, and FIG. 10B illustrates a state in which the angle position holding part is removed from the recess;
FIG. 11 is a diagram for explaining variation 1 of the angle position holding part;
FIG. 12A illustrates a preload applying part of the rotary reciprocating drive actuator, FIG. 12B illustrates variation 1 of the preload applying part, and FIG. 12C illustrates variation 2 of the preload applying part;
FIG. 13 illustrates a magnetic circuit configured by an electromagnetic driving part of the rotary reciprocating drive actuator;
FIG. 14 is a diagram for explaining a method of assembling the core body;
FIG. 15 is a diagram for explaining a method of attaching the rotary reciprocating drive actuator;
FIG. 16 is an external perspective view of a scanning device including a rotary reciprocating drive actuator of Embodiment 2;
FIG. 17 is an exploded perspective view of the scanning device including the rotary reciprocating drive actuator of Embodiment 2;
FIG. 18 illustrates variation 1 of the bearing;
FIG. 19 is an external perspective view of a scanning device including a rotary reciprocating drive actuator of Embodiment 3;
FIG. 20 is an exploded perspective view of the scanning device including the rotary reciprocating drive actuator of Embodiment 3; and
FIG. 21 illustrates a main part configuration of a scanner system using a rotary reciprocating drive actuator.

Description of Embodiments

Hereinafter, one or more embodiments of the present invention will be described with reference to the drawings.

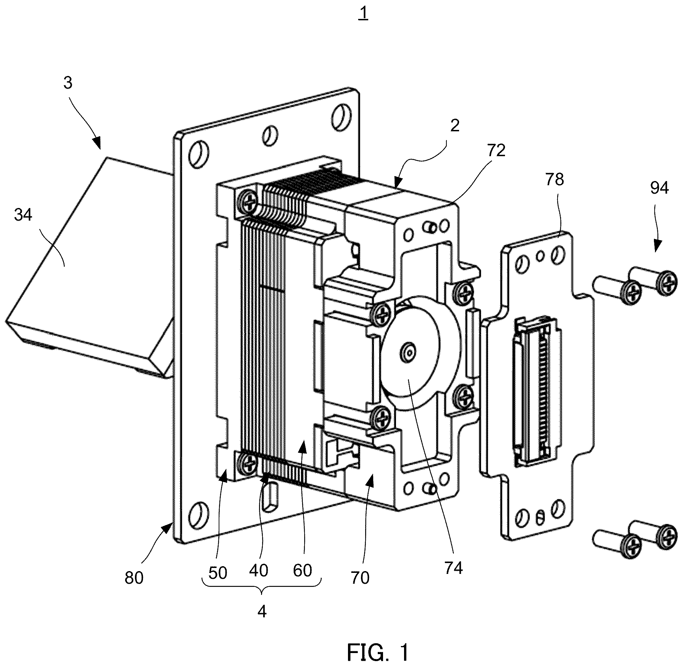

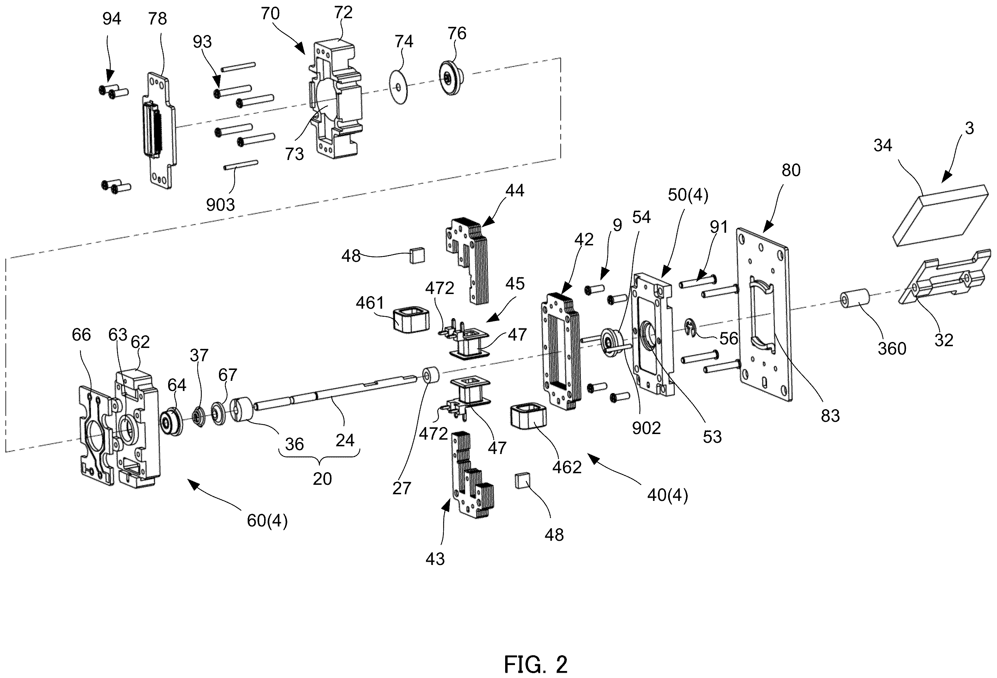

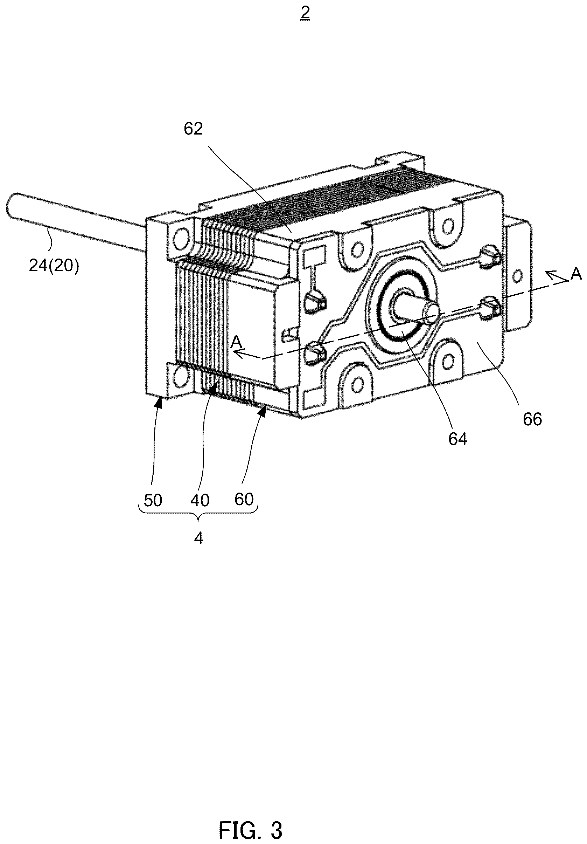

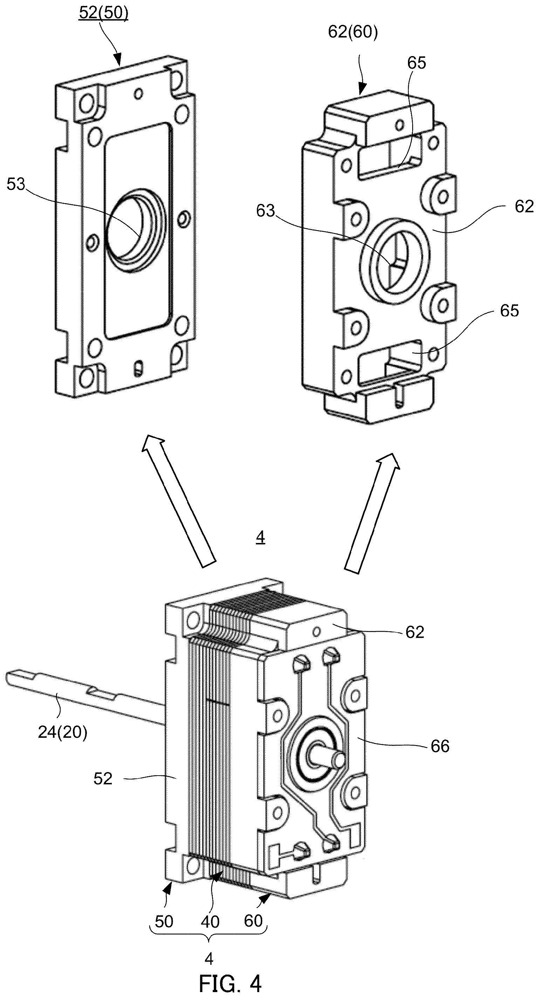

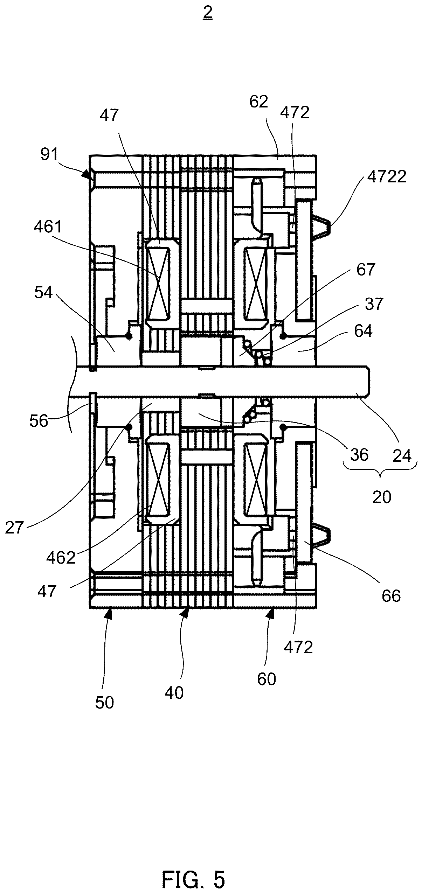

FIG. 1 is a partially removed external perspective view of a rotary reciprocating drive actuator of Embodiment 1, and FIG. 2 is an exploded perspective view of the scanning device including the rotary reciprocating drive actuator. FIG. 3 is a perspective view of the rotary reciprocating drive actuator, FIG. 4 is a perspective view illustrating a bottom cover and a top cover of the rotary reciprocating drive actuator, and FIG. 5 is a cross-sectional view taken along the line A-A in FIG. 3.
Rotary reciprocating drive actuator 1 illustrated in FIGS. 1 and 2 is used, for example, in a Laser Imaging Detection and Ranging (LIDAR) device. Rotary reciprocating drive actuator 1 is also applicable to an optical scanning device in a multifunction peripheral, a laser beam printer and other devices.
Rotary reciprocating drive actuator 1 illustrated in FIG. 1 includes, as main parts, drive unit 2, mirror part 3 that is rotatably supported by drive unit 2, and angle detection unit 70 that detects the rotation angle position of mirror part 3.

Mirror Part 3

Mirror part 3 serves as a movable object in rotary reciprocating drive actuator 1, is connected to rotating shaft 24, and is connected to drive unit 2 through rotating shaft 24. Mirror part 3 rotates back and forth (rotates in a reciprocating manner) around rotating shaft 24. Mirror part 3 is formed by, for example, adhering the back surface of mirror 34 to one surface of mirror holder 32. One end of rotating shaft 24 is fastened to mirror holder 32, and mirror holder 32 holds mirror 34 on the back side of mirror 34. Mirror part 3 is rotatably supported by rotating shaft 24 in a cantilevered manner through mirror holder 32; however, the configuration is not limited thereto.

A movable magnet (hereinafter simply referred to as "magnet") 36 is fastened to rotating shaft 24 at a portion located inside drive unit 2. Together with unit main body 4 that includes coils 461 and 462 and a core body, magnet 36 forms an electromagnetic driving part in drive unit 2. Magnet 36 is driven to rotate back and forth by the magnetic flux generated by electromagnetic driving part.

Drive Unit 2

As illustrated in FIGS. 1 to 5, drive unit 2 includes unit movable body 20 including rotating shaft 24 and magnet 36, and unit main body 4 that drives unit movable body 20 to rotate back and forth.

Drive unit 2 supports mirror part 3 with rotating shaft 24 that protrudes from unit main body 4 having a horizontally long rectangular parallelepiped shape, and drives mirror part 3 to rotate back and forth via rotating shaft 24. Drive unit 2 is used by fixing unit main body 4 to bracket 80 (which is used as a device housing or is fixed to a device housing) with fastening member 9 or the like. Bracket 80 includes an opening through which rotating shaft 24 passes, and this opening may be large enough to allow mirror part 3 pass therethrough. Unit main body 4 may have any shape such as a columnar shape, or may have a rectangular parallelepiped or cube shape. In the present embodiment, unit main body 4 has a shape of rectangular parallelepiped, thus, the installation space can be reduced, and unit main body 4 can be disposed in a space-saving installation space, such as a corresponding cubic gap. In addition, in drive unit 2, rotating shaft 24 passes through unit main body 4 and is supported to be rotatable back and forth while both ends of the rotating shaft protrude from unit main body 4. Together with mirror part 3, unit movable body 20 constitutes the movable body of rotary reciprocating drive actuator 1.

Unit Main Body 4

As illustrated in FIG. 2, unit main body 4 is composed of parts of drive unit 2, exclusive of rotating shaft 24 and magnet 36. Unit main body 4 includes core assembly 40 housing magnet 36 therein and through which rotating shaft 24 passes, and first shaft support 50 and second shaft support 60 each support rotating shaft 24 passing therethrough. In the following, for convenience, first shaft support 50 is also referred to as bottom cover 50, and second shaft support 60 is also referred to as top cover 60.

Unit main body 4 has a configuration such that bottom cover 50 and top cover 60 hold core assembly 40 therebetween from both sides in the extending direction of rotating shaft 24, and bottom cover 50 and top cover 60 are fixed to core assembly 40. Unit main body 4 constitutes a fixed body of rotary reciprocating drive actuator 1.

In unit main body 4, bottom cover 50, core assembly 40, and top cover 60 are fixed together by fastening members 91. In unit main body 4, the end surfaces on both sides of the rectangular parallelepiped core assembly 40 in the extending direction of rotating shaft 24 are completely covered by bottom cover 50 and top cover 60, respectively. In unit main body 4, bottom cover 50 and top cover 60 prevent a foreign matter such as dust from entering into core assembly 40 from the outside.

Core Assembly 40

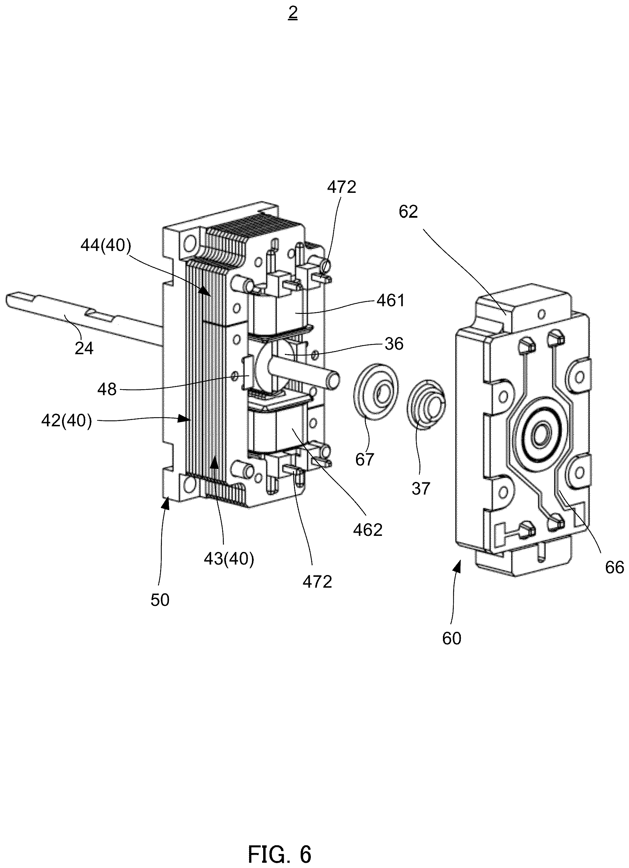

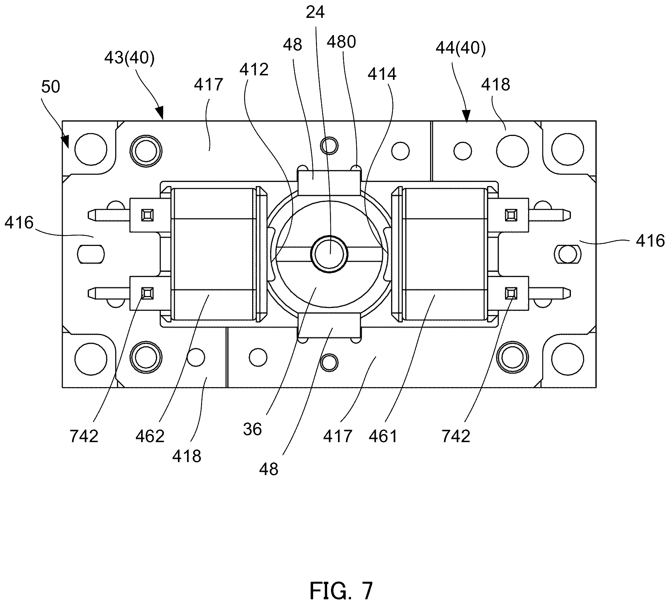

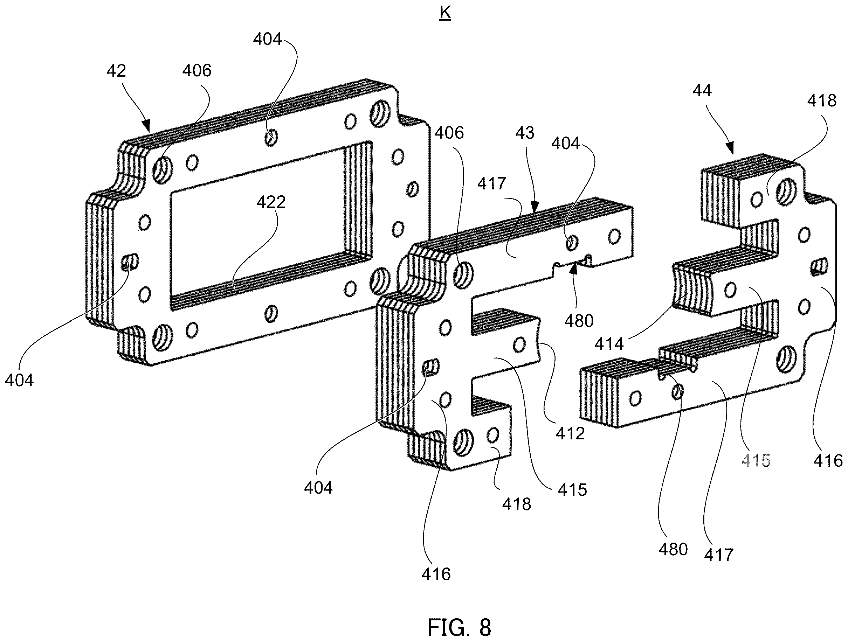

FIG. 6 is an exploded perspective view illustrating a state in which a bearing cover part is removed from the drive unit of the rotary reciprocating drive actuator. FIG. 7 illustrates a magnetic circuit configuration when the drive unit in FIG. 6 is viewed from the shaft end side. FIG. 8 is an exploded perspective view of a core body.

Core assembly 40 includes core body K in which coils 461 and 462 are disposed, and angle position holding parts (rotation angle position holding parts) 48. In core assembly 40, core body K is excited by energizing coils 461 and 462, and forms a magnetic circuit together with magnet 36.

In the present embodiment, core assembly 40 is formed into a rectangular parallelepiped shape with magnetic poles 412 and 414 provided in its inside.

Core Body K

Core body K constitutes a magnetic path through which magnetic flux flows, is excited by energizing coils 461 and 462, and drives magnet 36 to rotate back and forth by electromagnetic interaction with magnet 36.

FIG. 8 is an exploded perspective view of the core body.

Core body K is a structure formed by combining a plurality of cores (divided bodies) 42 to 44-herein, three divided bodies that are first to third cores. The plurality of divided bodies 42 to 44 are assembled in the axial direction of rotating shaft 24 so that their surfaces orthogonal to the axial direction fully come into contact with each other.

Core body K forms the entire outer shape of core assembly 40 and has a rectangular parallelepiped shape.

Core body K includes first core 42, and second core 43 and third core 44 each connected to first core 42. First core 42, second core 43, and third core 44 are magnetic materials, and allow magnetic flux generated when coils 461 and 462 are energized to flow between magnetic poles 412 and 414.

First core 42, second core 43, and third core 44 are, for example, each composed of a laminated core formed by laminating electromagnetic steel sheets such as silicon steel sheets. By forming each of first core 42, second core 43, and third core 44 into a laminated structure, the cores can be formed into a complex shape at low cost.

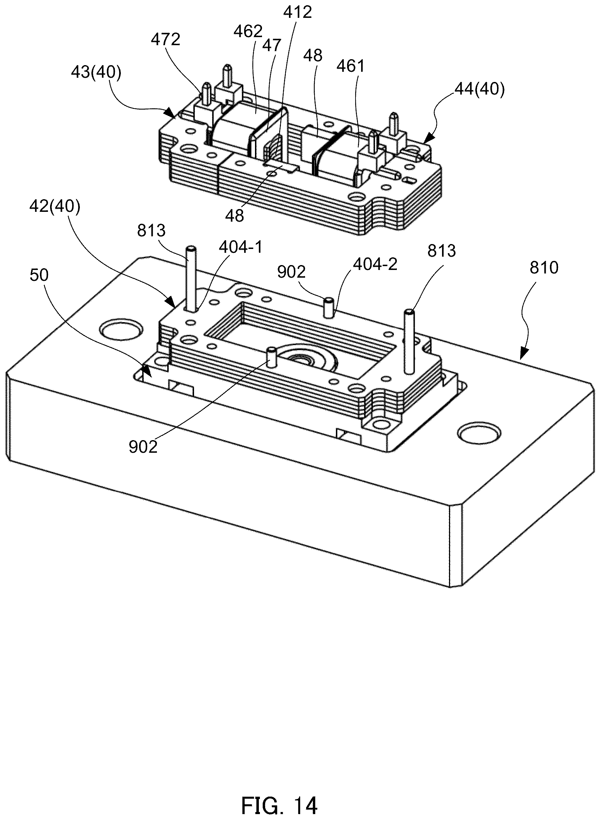

First core 42, second core 43, and third core 44 includes positioning holes 404, fixing holes 406, and the like at mutually corresponding positions. First core 42, second core 43, and third core 44 are integrally combined by inserting positioning pins 902, positioning pins 813 of the jig (see FIG. 14, herein each simply referred to as "jig positioning pin"), and fastening members 91 (see FIG. 2).

First Core 42

First core 42 constitutes the entire rectangular outer shape of core body K, and is formed in the shape of a horizontally long rectangular frame plate with rectangular opening 422 in the center of the first core. First core 42 is a rectangular frame-shaped body including, for example, a pair of short side parts (corresponding to below-described orthogonal parts 416 of second core 43 and third core 44) and a pair of long side parts (corresponding to below-described rod-shaped bridge parts 417 and rod-shaped connection parts 418 of second core 43 and third core 44).

Magnetic poles 412 and 414 and magnet 36 are disposed inside rectangular opening 422 of first core 42 when viewed from the axial direction. Second core 43 and third core 44 come into contact with and are joined to first core 42 from one side in the axial direction. First core 42, second core 43, and the third core 44 thus connect magnetic pole 412 with connect magnetic pole 414 and form a magnetic path that surrounds magnetic poles 412 and 414 and magnet 36 from all sides.

Second Core 43 and Third Core 44

Second core 43 and third core 44 are the same components formed in the same shape and produced in the same manner.

Each of second core 43 and third core 44 includes rod-shaped part 415 having a shape of a rod and including magnetic pole 412 or 414 at the head thereof, orthogonal part 416, rod-shaped bridge part 417, and rod-shaped connection part 418.

Magnetic poles 412 and 414 have the same shape, are disposed on the outer periphery of magnet 36 so as to face each other, and each are formed in an arc shape corresponding to the outer periphery of magnet 36. Magnetic poles 412 and 414 are excited by energizing coils 461 and 462, and generate polarities depending on the energization directions.

Magnetic poles 412 and 414 each have, for example, an external dimension that allows the magnetic pole to insert into bobbins 47 (on which coils 461 and 462 are wound) from the head side. Bobbin 47 of coil body 45 is inserted from the magnetic poles 412 or 414 side, and core body K (specifically, rod-shaped part 415) is sheathed in coil body 45. Details regarding the positional relationship between magnetic poles 412 and 414 and magnet 36 will be described below.

Rod-shaped part 415 is sheathed in coil body 45 (see FIGS. 2 and 5 to 7), and at the base end of rod-shaped part 415, orthogonal part 416 is branched and extends in a direction orthogonal to rod-shaped part 415.

Rod-shaped bridge part 417 and rod-shaped connection part 418 are respectively connected to both ends of orthogonal part 416, and each of rod-shaped bridge part 417 and rod-shaped connection part 418 extends parallel to rod-shaped part 415.

Together with a pair of one side parts each composed of rod-shaped bridge part 417 and rod-shaped connection part 418, the pair of orthogonal parts 416 constitute a rectangular frame-shaped magnetic path surrounding rectangular opening 422 in core body K.

Rod-shaped bridge part 417 of second core 43 and rod-shaped connection part 418 of third core 44 are disposed adjacent to each other on a straight line, and rod-shaped bridge part 417 of third core 44 and rod-shaped connection part 418 of second core 43 are disposed adjacent to each other on a straight line. Rod-shaped bridge part 417 and rod-shaped connection part 418 may be configured to come into contact with the entire surface of rod-shaped connection part 418 and rod-shaped bridge part 417 of another adjacent core.

At least one of rod-shaped bridge part 417 and rod-shaped connection part 418 is provided with recess 480 in which angle position holding part 48 (namely a convex magnetic pole) is disposed.

Recess 480 is not formed in both of rod-shaped bridge part 417 and rod-shaped connection part 418 in each of the pair of opposing side parts of the magnetic path (rod-shaped part 415 is located between the opposing side parts). That is, first core 42, second core 43, and third core 44 are configured as divided bodies that are divided at positions other than those of recesses 480.

Recess 480 is formed in a portion approximately at the center of the one side part (composed of rod-shaped bridge part 417 and rod-shaped connection part 418) of the rectangular frame-shaped magnetic path-the portion faces magnet 36 in a direction orthogonal to the axial direction.

In the present embodiment, first core 42 and a portion of second core 43 and third core 44 of core body K surround rod-shaped parts 415 (including magnetic poles 412 and 414) and magnet 36 from all sides in a direction orthogonal to the axial direction. Specifically, the portion of second core 43 and third core 44 is a rectangular surrounding part composed of the pair of orthogonal parts 416, the pair of rod-shaped bridge parts 417, and the pair of rod-shaped connection parts 418.

This configuration prevents a foreign matter from coming into contact with coils 461 and 462 from the outside. The thickness of core body K (the length in the axial direction and also the thickness of the magnetic path) is the same at all locations, and the length of orthogonal part 416 is less than the length of the one side part composed of rod-shaped bridge part 417 and rod-shaped connection part 418.

Coil Body 45

Coil bodies 45 are configured by winding coils 461 and 462 around tubular bobbins 47 and 47, respectively. Rod-shaped parts 415 of second core 43 and third core 44 are respectively sheathed in bobbins 47.

The ends of coils 461 and 462 are connected to metal terminals 472 embedded in bobbins 47, respectively. As rod-shaped parts 415 of second core 43 and third core 44 are sheathed in bobbins 47, coils 461 and 462 are each disposed around rod-shaped part 415.

Coils 461 and 462 are respectively disposed adjacent to magnetic poles 412 and 414 by respectively sheathing rod-shaped parts 415 in bobbins 47. The winding directions of coils 461 and 462 are set so that magnetic flux is suitably generated from one of magnetic poles 412 and 414 toward the other pole when energized. In addition, metal terminal 472 is disposed so as to protrude to one side in the axial direction (toward the top cover 60 side).

Angle Position Holding Part (also referred to as Rotation Angle Position Holding Part or Biasing Part) 48

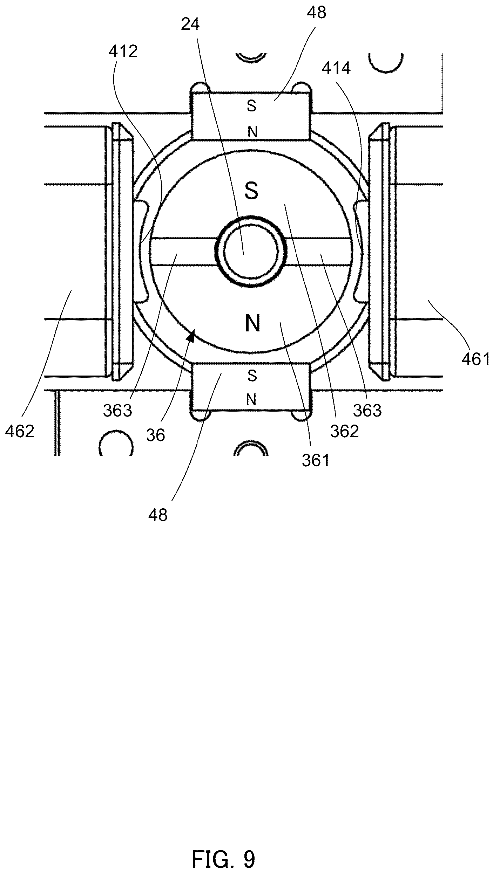

FIG. 9 is an enlarged view of an angle position holding part illustrated in FIG. 7.

As illustrated in FIGS. 7 to 9, angle position holding part 48 faces magnet 36 in the radial direction of rotating shaft 24, and is disposed between magnetic poles 412 and 414 in the circumferential direction of rotating shaft 24 (or magnet 36). Angle position holding part 48 attracts magnet 36 and urges unit movable body 20 toward the initial position of reciprocating rotation (rotation in a reciprocating manner).

That is, together with rod-shaped parts 415, angle position holding parts 48 form magnetic springs each between magnet 36 and angle position holding part 48. Angle position holding part 48 maintains the rotation angle position of magnet 36 (that is, the rotation angle position of rotating shaft 24) at the initial position by the magnetic springs formed between magnet 36 and angle position holding parts 48, especially in a normal state (current is not applied) in which coils 461 and 462 are not energized.

The initial position is the initial position when magnet 36 rotates back and forth, is the reference position for the swaying of magnet 36, and is a neutral position where magnet 36 moves the same length from both positions where magnet 36 is attracted to magnetic poles 412 and 414. When the magnet 36 is in the initial position, as illustrated in FIG. 9, magnetic pole switching parts (boundary parts) 363 of magnetic poles 361 and 362 of magnet 36 are at positions to directly face magnetic poles 412 and 414. In addition, the mounting position of mirror part 3 is adjusted with reference to the state in which magnet 36 is in the neutral position.

Angle position holding part 48 is a magnetic material, includes a permanent magnet, and functions as a biasing part. Angle position holding parts 48 are configured from a pair of permanent magnets with magnet 36 in between. With this configuration, magnetic attraction forces are each generated between one of angle position holding parts 48 and corresponding one of the magnetic poles (which are different to each other) of magnet 36. Both of angle position holding parts 48 thus attract magnet 36 to position magnet 36 at the initial position.

As described above, the magnet (permanent magnet) of angle position holding part 48 attracts magnet (permanent magnet) 36 and determines the initial position for reciprocating rotation. This configuration can achieve stable torque generation of movable body 20 including magnet 36 and obtain the structure capable of generating the maximum torque at the initial position.

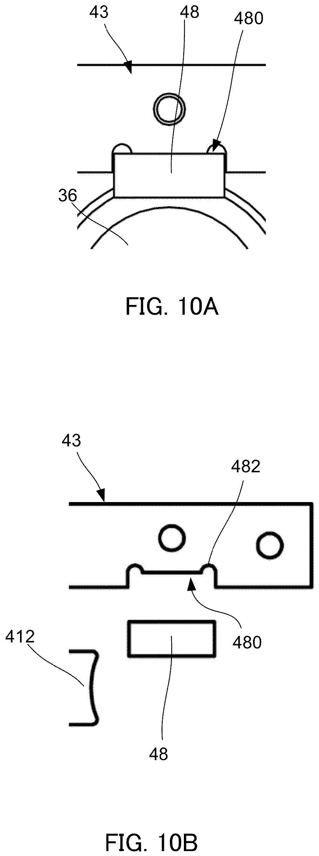

FIG. 10A illustrates a state in which the angle position holding part is attached to a recess, and FIG. 10B illustrates a state in which the angle position holding part is removed from the recess.

Angle position holding parts 48 are respectively provided in second core 43 and third core 44, and are attached so as to be fitted into recesses 480 disposed to face each other. FIG. 10A illustrates a state in which angle position holding part 48 is attached to recess 480 of second core 43, and FIG. 10B illustrates a state in which angle position holding part 48 is removed from recess 480.

Angle position holding part 48 fitted into recess 480 is attached in such a way that a portion of the angle position holding part protrudes inward from the inner surface (the surface facing rod-shaped part 415) of rod-shaped bridge part 417 (the one side part, which is a magnetic path) of second core 43. Circular notched parts are formed in corners 482 of recess 480, and each notched part serves as a relief for the corner of angle position holding part 48 to be attached in recess 480, thereby suitably positioning angle position holding part 48 by absorbing the tolerance. In addition, the notched part functions as adhesive a reservoir during the adhesion of angle position holding part 48.

Angle position holding parts 48 are disposed in such a way that magnet 36 is placed between magnetic poles 412 and 414 at the center of a direction in which magnetic poles 412 and 414 face each other (facing direction), and the angle position holding parts face each other in a direction orthogonal to both the facing direction and the axial direction. The pair of angle position holding parts 48 (with different poles) are disposed to face each other and have the same function.

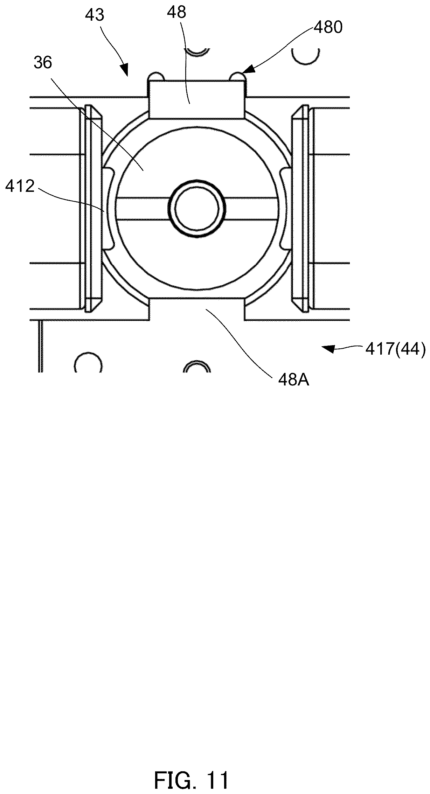

A configuration in which a permanent magnet is used as angle position holding part 48 is described above; however, the present invention is not limited to this configuration. Any magnetic material (especially ferromagnetic material) that forms a magnetic spring with magnet 36 may be used. For example, the following configuration is possible as illustrated in FIG. 11: one of the pair of angle position holding parts 48 (convex magnetic poles) is provided integrally with a core (for example, rod-shaped bridge part 417 of third core 44) which is a magnetic material (ferromagnetic material) and forms a magnetic path. At this time, it is preferable that angle position holding part 48A has the same external shape as angle position holding part 48.

Bottom Cover 50 and Top Cover 60

Bottom cover 50 and top cover 60 illustrated in FIGS. 2 to 6 are made of, for example, an electrically conductive material, and function as an electromagnetic shield for the electromagnetic driving part. Bottom cover 50 and top cover 60 rotatably support rotating shaft 24 and function as shaft supports for unit main body 4.

Bottom cover 50 and top cover 60 are plate-shaped bodies made of, for example, aluminum or aluminum alloy and include openings 53 and 63 for shafts (herein each simply referred to as "shaft opening") through which rotating shaft 24 passes. Bottom cover 50 and top cover 60 allow rotating shaft 24 to pass through shaft openings 53 and 63, hold core assembly 40 in between, and fixed to core assembly 40. Aluminum or aluminum alloy is used as the electromagnetic noise shielding material for bottom cover 50 and top cover 60, thereby obtaining a configuration with a high degree of design freedom and sufficient rigidity.

Bottom cover 50 and top cover 60 are respectively disposed on both sides of core assembly 40 in the axial direction. This configuration allows bottom cover 50 and top cover 60 to prevent impurities such as dust from entering core assembly 40 from the axial direction, as well as prevent noise from entering and noise (magnetic flux) from exiting from core body K to the outside.

Bottom cover 50 and top cover 60 respectively include plate-shaped main bodies with shaft openings 53 and 63 in the centers. Bearings 54 and 64 are respectively fitted into shaft openings 53 and 63, and bottom cover 50 and top cover 60 are located on the same axis.

In bottom cover 50, the joint surface with core assembly 40 is provided along the outer periphery of the main body, and is formed into a frame shape corresponding to the outer shape of first core 42. As illustrated in FIGS. 2 and 5, retaining ring 56 that fits around rotating shaft 24 is disposed adjacent to the back side of bearing 54 (on the opposite side from core assembly 40), and bearing 54 is disposed so as not to come off from bottom cover 50. Bearing 54 is composed of, for example, a rolling bearing or a sliding bearing, and rotatably supports rotating shaft 24 passing through the bearing.

Top cover 60 is provided with shaft opening 63 at its center, and includes relay board 66 and top cover main body 62 that covers core assembly 40 in the axial direction.

Bearing 64 is fitted into shaft opening 63 of top cover main body 62 toward the other end of rotating shaft 24 and is attached so as not to come off toward the other end.

In addition, top cover main body 62 is provided with openings 65 for terminals (herein each simply referred to as "terminal opening") into which metal terminals 472 of coil bodies 45 are inserted. Metal terminal 472 passing through terminal opening 65 is connected to relay board 66. In FIG. 5, metal terminals 472 are electrically connected to relay board 66 via fillets (solder) 4722. This configuration enables the following: by simply attaching top cover 60 to core assembly 40, coils 461 and 462 of core assembly 40 are disposed to be connectable to relay board 66, achieving easy connection to supply power from external equipment via relay board 66.

Top cover main body 62 is formed in the shape of a rectangular tube with a lid, that is, a box shape. Preload spring 37 with rotating shaft 24 sheathed inside disposed at top cover main body 62. Relay board 66 is disposed on the outer surface of the lid part of top cover main body 62, and relay board 66 constitutes the surface of the lid part.

Preload spring 37 allows rotating shaft 24 to be sheathed inside, compresses in the axial direction, and urges the components the preload spring comes into contact with in the axial direction. Preload spring 37 is disposed between bearing 64 and magnet 36, and is connected to magnet 36 via receiving part 67 for installing the spring. That is, receiving part 67, that is, a spring installation ring is disposed between preload spring 37 and magnet 36. Receiving part 67 prevents the force of preload spring 37 from being directly applied to magnet 36 fixed by adhesion or the like, thereby reducing unnecessary force to increase the reliability of the actuator.

Preload spring 37 applies an axial load to bearing 64 . In addition, preload spring 37 also has a function of biasing magnet 36 and rotating shaft 24 toward the one end so that magnet 36 and rotating shaft 24 are positioned at a predetermined position. Preload spring 37 in unit main body 4 applies preload to bearings (for example, ball bearings) 54 and 64 toward both sides of rotating shaft 24. Preload spring 37 is disposed between mirror part 3 (which is a movable object) and the inside of the bearing 64, and applies preload from the inside of unit main body (also called a motor) 4 to bearings 54 and 64 on both sides in the axial direction. As a result, unit main body 4 can be designed with a stable preload without being affected by external influences. A preload spring 37 having a conical shape can reduce the size.

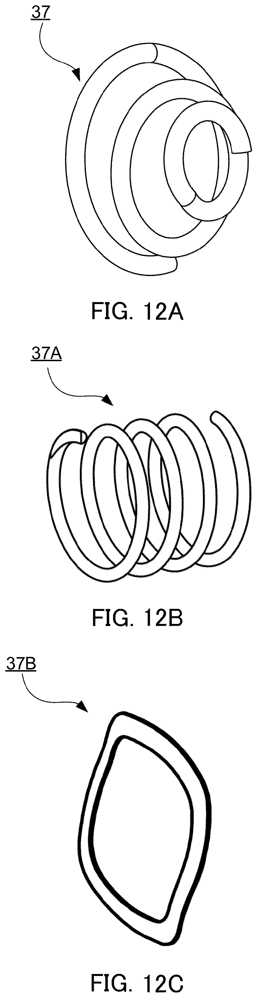

FIGS. 12A to 12C illustrate examples of the preload spring.

As illustrated in FIG. 12A, preload spring 37 is a coil spring configured by spirally winding a round steel wire to form a conical shape, and has different diameters at one end and the other end. The preload spring 37 may be replaced with tubular coil spring 37A formed by spirally winding a round steel wire, as illustrated in FIG. 12B. In addition, wave spring 37B with a low height in the direction of expansion and contraction (that is, a low height as a spring) and having a shape such that a plate-shaped steel wire is wound spirally or annularly and waves are added may be used as illustrated in FIG. 12C, in place of preload spring 37.

Magnet 36 is arranged in line with bearing 54 (which is fitted into bottom cover 50 and whose movement toward one end is restricted) in the axial direction with stopper 27 therebetween.

That is, magnet 36 is restricted from moving toward one end in the axial direction, and is biased from the other end toward the one end by preload spring 37. The movement of magnet 36 with respect to unit main body 4 in the axial direction (thrust direction, toward the bearing 64) is restricted. As a result, magnet 36 is always located at a predetermined position within core assembly 40 (at a position to face magnetic poles 412 and 414 and angle position holding parts 48).

As the positioning is performed in the axial direction of rotating shaft 24, components (such as encoder disk 74) of angle detection unit 70 provided on the other end side of rotating shaft 24 illustrated in FIG. 2 are also positioned in the axial direction. As a result, the components of angle detection unit 70, such as encoder disk 74, do not move in the axial direction (rotating shaft 24 does not move either), and thus do not collide with other components.

Rotating shaft 24 passes through shaft opening 63 of top cover 60 via bearing 64, and the end of rotating shaft 24 protrudes from relay board 66. Encoder disk 74 of angle detection unit 70 is fixed to this protruding end. Bearing 64 is inserted into shaft opening 63 from the core assembly 40 side, and therefore, the flange part of bearing 64 comes into contact with the opening edge on the core assembly 40 side, and bearing 64 is attached with its movement in the insertion direction being restricted. Bearing 64 is configured, for example, by a rolling bearing, but may also be configured by a bearing such as a sliding bearing.

Unit Movable Body 20

Together with core assembly 40, magnet 36 constitutes an electromagnetic driving part to rotate rotating shaft 24 back and forth.

As illustrated in FIG. 9, magnet 36 is a ring-shaped magnet in which N (north) pole 361 and S (south) pole 362 are alternately disposed in the circumferential direction. Magnet 36 is disposed in a space surrounded by magnetic poles 412 and 414 of core body K and angle position holding parts 48, and faces all of magnetic poles 412 and 414 and angle position holding parts 48 in directions orthogonal to the axial direction. Regarding the polarities of magnet 36, magnetic pole 361 may be an S pole, and magnetic pole 362 may be an N pole.

It is preferable that magnet 36 is disposed with a predetermined gap G from magnet 36 to magnetic poles 412 and 414 and angle position holding parts 48.

Magnet 36 generates magnetic force (attractive force and repulsive force) between magnet 36 and magnetic poles 412 and 414 where polarity is generated according to the energization direction by first to third cores 42 to 44 (in particular, rod-shaped parts 415) which are excited when coils 461 and 462 are energized.

In the present embodiment, as illustrated in FIG. 9, magnet 36 is disposed along the axial direction of rotating shaft 24, and includes magnetic pole switching parts 363 (namely a boundary between different polarities) where the polarities switched. Magnet 36 is, for example, a two-pole magnet magnetized so as to be equally divided into N pole 361 and S pole 362. The number of magnetic poles of magnet 36 (two in the present embodiment) is equal to the number of magnetic poles 412 and 414 of core body K. Magnet 36 may be magnetized to have two or more poles depending on the amplitude during movement. In this case, the magnetic pole parts of core body K are provided corresponding to the magnetic poles of magnet 36.

When coils 461 and 462 are not energized, N pole 361 and S pole 362 of magnet 36 are respectively attracted to angle position holding parts 48 and are held in positions to face the corresponding angle position holding parts. At this time, magnet 36 is held at the initial position, which is the neutral position for the forward and backward movements. In the neutral position, magnetic pole switching parts 363 of magnet 36 directly face magnetic poles 412 and 414, and therefore, drive unit 2 can generate maximum torque and stably drive the movable body.

Moreover, magnet 36 is composed of, for example, a two-pole magnet. As a result, magnet 36, in cooperation with core body K, can easily drive the movable object with high amplitude and can improve the driving performance. In the above embodiment, magnet 36 includes a pair of magnetic pole switching parts 363, but magnet 36 may include two or more pairs of magnetic pole switching parts 363.

Angle Detection Unit 70

Angle detection unit 70 is capable of detecting the rotation angle of a movable body including magnet 36 and rotating shaft 24, and controls the rotation angle position and rotation speed of the movable body during driving, specifically, of mirror part 3 (which is a movable object).

Angle detection unit 70 is attached to top cover 60 of unit main body 4 so as to stack on the top cover in the axial direction, as illustrated in FIGS. 1, 2, and 5. Angle detection unit 70 includes sensor cover 72, encoder disk 74, encoder wheel 76, and sensor board 78 on which an optical sensor (not illustrated) is mounted.

Sensor cover 72 is attached to top cover 60 via fastening members 93 so as to cover top cover 60.

Sensor cover 72 includes through hole 73. The other end of rotating shaft 24 is disposed in through hole 73, and encoder disk 74 and encoder wheel 76 are attached to the other end. Sensor board 78 is disposed to cover sensor cover 72. The optical sensor mounted on sensor board 78 is disposed to face encoder disk 74 in the axial direction, and emits light orthogonally to encoder disk 74.

Encoder disk 74 has an annular shape, is attached to be fastened to rotating shaft 24 via a tubular part in the inner peripheral portion of the encoder disk, and rotates together with magnet 36 and mirror part 3. The rotational position of encoder disk 74 is set to be the same as the rotational position of rotating shaft 24, and the optical sensor emits light to encoder disk 74 and determines the rotational position (angle) of encoder disk 74 based on the reflected light. The rotational positions of magnet 36 and mirror part 3 thus can be detected by the optical sensor.

As described above, sensor board 78 is attached to sensor cover 72 to cover the rotation angle sensor components such as the optical sensor, encoder disk 74, and encoder wheel 76, thereby housing those components inside sensor cover 72. Therefore, impurities such as dust can be prevented from entering into sensor cover 72 of angle detection unit 70, and light interference can be prevented, thereby performing stable detection.

In unit main body 4, mirror part 3 is supported by rotating shaft 24 protruding from bottom cover 50, and angle detection unit 70 for detecting the rotation angle of rotating shaft 24 protruding from top cover 60 is provided on the top cover 60 side opposite to the bottom cover 50 side. Angle detection unit 70 is attached to the outer surface of top cover 60.

In angle detection unit 70, the optical sensor is attached to sensor board 78 to be attached to top cover 60. The optical sensor can be easily taken out by simply taking sensor board 78 out from top cover 60. Wiring for a drive power source of rotary reciprocating drive actuator 1 connected to relay board 66 may be mounted on sensor board 78 .

Accordingly, when a problem occurs in angle detection unit 70, each sensor component can be easily replaced regardless of the structure. Furthermore, it becomes possible to assemble angle detection unit 70 at the final stage of assembly.

As a result, angle detection unit 70 including an expensive optical sensor (not illustrated) can be assembled after confirming that the other components are properly assembled. The configuration can reduce the risk of wasting the expensive angle detection unit 70, especially the optical sensor (not illustrated) due to poor assembly of other components. Moreover, even when there is a problem with the actuator after installation, the optical sensor mounted on the sensor board can be immediately taken out by taking sensor board 78 out.

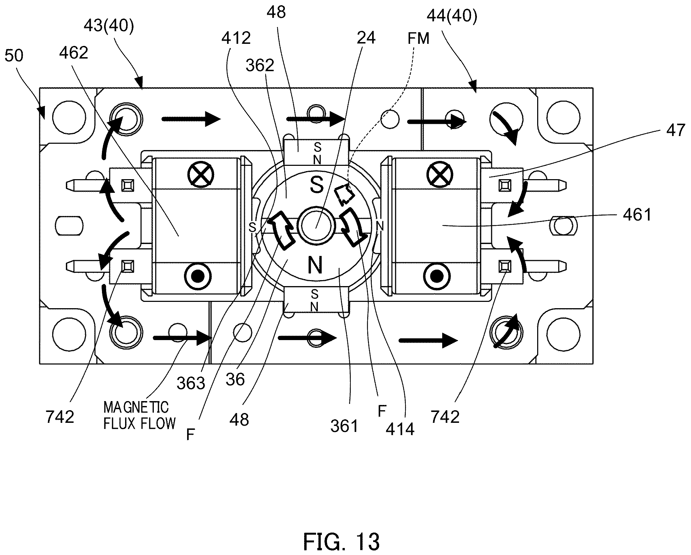

FIG. 13 illustrates a magnetic circuit configured by the electromagnetic driving part of the rotary reciprocating drive actuator.

The two magnetic poles 412 and 414 of core body K of core assembly 40 are disposed with magnet 36 therebetween with an air gap G between the magnetic pole and the magnet. When coils 461 and 462 are not energized, magnet 36 is held at the neutral position by the magnetic attraction forces between the magnet and angle position holding parts 48, as illustrated in FIG. 9.

At the neutral position, one of S pole 362 and N pole 361 (S pole 362 in FIG. 13) of magnet 36 is attracted to angle position holding part 48 (see magnetic spring torque FM in FIG. 13). At this time, magnetic pole switching parts 363 face the center positions of magnetic poles 412 and 414 of core body K.

When coils 461 and 462 are energized, core body K is excited, and magnetic poles 412 and 414 have polarities depending on the energization direction. As illustrated in FIG. 13, when coils 461 and 462 are energized, magnetic flux is generated inside core body K, and magnetic pole 412 becomes the S pole and magnetic pole 414 becomes the N pole. As a result, magnetic pole 412 magnetized to the S pole attracts N pole 361 of magnet 36, and magnetic pole 414 magnetized to the N pole attracts S pole 362 of magnet 36. Torque in the F direction is then generated in magnet 36 around rotating shaft 24, and magnet 36 rotates in the F direction. With this rotation, rotating shaft 24 also rotates in the F direction, and mirror part 3 fixed to rotating shaft 24 also rotates in the F direction.

Next, when coils 461 and 462 are energized in opposite directions, magnetic flux generated inside core body K flows in the opposite direction, and magnetic pole 412 becomes the N pole and magnetic pole 414 becomes the S pole. Magnetic pole 412 magnetized to the N pole attracts S pole 362 of magnet 36, and magnetic pole 414 magnetized to the S pole attracts N pole 361 of magnet 36. Torque in the opposite direction to the F direction is then generated in magnet 36 around rotating shaft 24, and magnet 36 rotates in the opposite direction to the F direction. With this rotation, rotating shaft 24 also rotates, and mirror part 3 fixed to rotating shaft 24 also rotates.

Rotary reciprocating drive actuator 1 drives mirror part 3 to rotate back and forth by repeating the above operation.

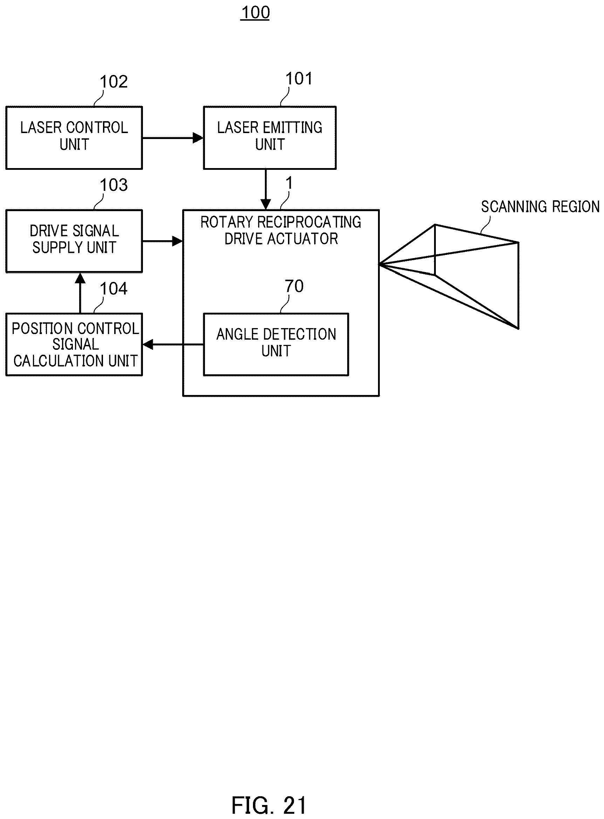

In reality, rotary reciprocating drive actuator 1 is driven by alternating current waves that are input to coils 461 and 462 from a power supply part (for example, corresponding to drive signal supply unit 103 in FIG. 21) via relay board 66.

That is, the energization directions of coils 461 and 462 are periodically switched. At the switching of the energization directions, magnet 36 is biased to return to the neutral position by the magnetic attractive force between angle position holding part 48 and magnet 36, that is, the restoring force of the magnetic spring (magnetic spring torque FM illustrated in FIG. 13 and the magnetic spring torque in the opposite direction). Torque in the F direction and torque in the opposite direction to the F direction thus alternately act on the movable body around the axis. Therefore, the movable body is driven to rotate back and forth.

In the following, the driving principle of rotary reciprocating drive actuator 1 will be briefly described. In rotary reciprocating drive actuator 1 of the present embodiment, the moment of inertia of a movable body (movable body 20) is J [kg·m$^2$], and the spring constant in the torsional direction of a magnetic spring (magnetic poles 412 and 414, angle position holding parts 48, and magnet 36) is K$_{sp}$. In this case, movable body 20 vibrates (rotates in a reciprocating manner) with respect to a fixed body (unit main body 4) at a resonance frequency F$_r$ [Hz] calculated by the equation 1.

$$Fr = \frac{1}{2\pi}\sqrt{\frac{K_{sp}}{J}}$$

... Equation 1

$Fr$ : Resonance frequency [Hz]
$J$ : Moment of inertia [kg·m$^2$]
$K_{sp}$ : Spring constant [N·m/rad]

Since the movable body constitutes a mass portion in a vibration model of a spring - mass system, when an alternating current wave having a frequency equal to the resonance frequency F$_r$ of the movable body is input to coils 461 and 462, the movable body enters a resonance state. That is, by inputting the alternating current wave having a frequency substantially equal to the resonance frequency F$_r$ of the movable body to coils 461 and 462 from a power supply part, the movable body can be efficiently vibrated.

A motion equation and a circuit equation indicating the driving principle of rotary reciprocating drive actuator 1 are described below. Rotary reciprocating drive actuator 1 is driven based on the motion equation expressed by the equation 2 and the circuit equation expressed by the equation 3.

$$J\frac{d^2\theta(t)}{dt^2} = K_t\, i(t) - K_{sp}\theta(t) - D\frac{d\theta(t)}{dt} - T_{Loss}$$

... Equation 2

$J$ : Moment of inertia [kg·m$^2$]
$\theta(t)$ : Angle [rad]
$K_t$ : Torque constant [N·m/A]
$i(t)$ : Current [A]
$K_{sp}$ : Spring constant [N·m/rad]
$D$ : Attenuation coefficient [N·m/(rad/s)]
$T_{Loss}$ : Load torque [N·m]

$$e(t) = Ri(t) + L\frac{di(t)}{dt} + K_e\frac{d\theta(t)}{dt} \qquad \dots \text{Equation 3}$$

$e(t)$: Voltage [V]
$R$ : Resistance [S2]
$L$ : Inductance [H]
$K_e$ : Back electromotive force constant [V/(rad/s)]

That is, the moment of inertia J [kg·m$^2$] of the movable body, the rotation angle $\theta(t)$ [rad], the torque constant $K_t$ [N·m/A], the current i(t) [A], the spring constant $K_{sp}$ [N m/rad], the attenuation coefficient D [N·m/(rad/s)], the load torque $T_{Loss}$ [N·m], and the like in rotary reciprocating drive actuator 1 can be appropriately changed within the range satisfying the equation 2. Further, the voltage e(t) [V], the resistance R [$\Omega$], the inductance L [H], and the back electromotive force constant $K_e$ [V/(rad/s)] can be appropriately changed within the range satisfying the equation 3.

As described above, rotary reciprocating drive actuator 1 can obtain an efficient and large vibration output when the coil is energized by the alternating current wave corresponding to the resonance frequency $F_r$ determined by the moment of inertia J of the movable body and the spring constant $K_{sp}$ of the magnetic spring.

FIG. 14 is a diagram for explaining a method of assembling a core body.

For assembling rotary reciprocating drive actuator 1, for example, positioning jig 810 including a recess (into which unit main body 4 can be inserted) in the center thereof is used. By disposing bottom cover 50 and first core 42 in the recess of positioning jig 810, horizontal movement during assembly is restricted. Positioning pins 902 and jig positioning pins 813 are inserted into positioning holes 404 of first core 42 so as to protrude from the upper surface of first core 42. Jig positioning pin 813 is fixed to positioning jig 810 by press fitting.

Rod-shaped parts 415 of second core 43 and third core 44 are respectively inserted into coil bodies 45, and coil bodies 45 are assembled adjacent to magnetic poles 412 and 414, respectively. Angle position holding parts 48 (which are permanent magnets) are respectively attached to recesses 480 of second core 43 and third core 44. Positioning pins 902 (protruding from positioning hole 404 of first core 42) and jig positioning pin 813 (provided in positioning jig 810) are inserted into corresponding positioning holes 404 of second core 43 and third core 44. First core 42, second core 43, the third core 44 are combined and suitably joined.

At this time, a fixing pin is inserted into idle hole (elongated hole) 404-1 among positioning holes 404, and then jig positioning pin 813 of positioning jig 810 is inserted into the other positioning hole 404 at the correct position, thereby attaching the core body. It is thus possible to accurately combine components each other (first core 42 and second core 43). In addition, as second core 43 is attached to first core 42 via positioning pins 902 inserted into positioning holes 404-2, positioning pins 902 also function as a stop preventing second core 43 or third core 44 from rotating in the horizontal direction.

Even under the influence of the magnetic attraction force of angle position holding part 48 (which are permanent magnets) and magnet 36, unit main body 4 can be easily assembled. For example, for assembling unit main body 4 after disposing magnet 36 at a predetermined position, second core 43 and third core 44 are attracted to magnet 36, making the assembly difficult. However, in the present embodiment, positioning holes 404, which function as rotation stops during assembly, are provided in first to third cores 42 to 44. For assembling first core 42, second core 43, and third core 44, first core 42, second core 43, and third core 44 can be easily and accurately assembled while their rotation is prevented, thereby improving workability during the assembly.

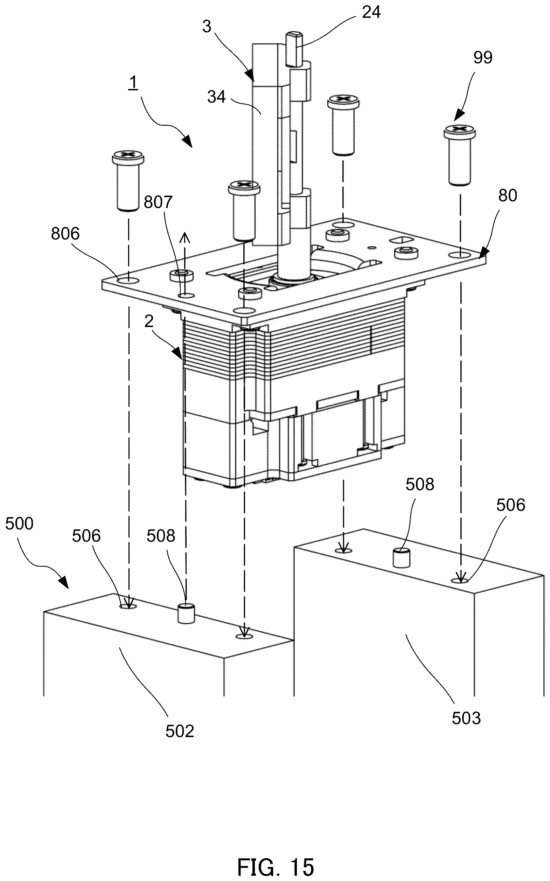

FIG. 15 is a diagram for explaining a method of attaching the rotary reciprocating drive actuator.

In rotary reciprocating drive actuator 1, bracket 80 is provided with fixing holes 806, and device frame 500 is provided with a pair of walls to be attached (herein each simply referred to as "attached wall") 502 and 503 to which rotary reciprocating drive actuator 1 is attached.

Attachment holes 506 and positioning protrusions 508 are provided at predetermined positions on the upper surfaces of attached walls 502 and 503.

For attaching rotary reciprocating drive actuator 1 to device frame 500, fixing holes 806 of bracket 80 are matched with attachment holes 506 of attached walls 502 and 503 when bracket 80 is disposed on attached walls 502 and 503. At this time, positioning protrusion 508 is inserted into positioning hole 807 of bracket 80. Positioning hole 807 of bracket 80 has a shape that has some play with respect to the shape of positioning protrusion 508. Therefore, after placing bracket 80 on attached walls 502 and 503, by aligning attachment holes 506 with corresponding fixing holes 806 so that aligning attachment hole 506 and fixing hole 806 form one opening, and inserting fastening members 99 into the openings, bracket 80 can be easily fixed to attached walls 502 and 503.

Rotary reciprocating drive actuator 1 can be positioned and fixed from a direction parallel to rotating shaft 24. Rotary reciprocating drive actuator 1 thus can be fixed at a position where the dimensions can be defined based on the drive shaft as a reference. In addition, rotary reciprocating drive actuator 1 can be fixed from the direction parallel to rotating shaft 24 by electing rotating shaft 24 vertically, and therefore, assembly becomes easy.

As described above, by positioning and fixing the rotary reciprocating drive actuator in a direction parallel to rotating shaft 24, it is possible to perform highly accurate positioning and fixing with less additional dimension than when using other parts.

Embodiment 2

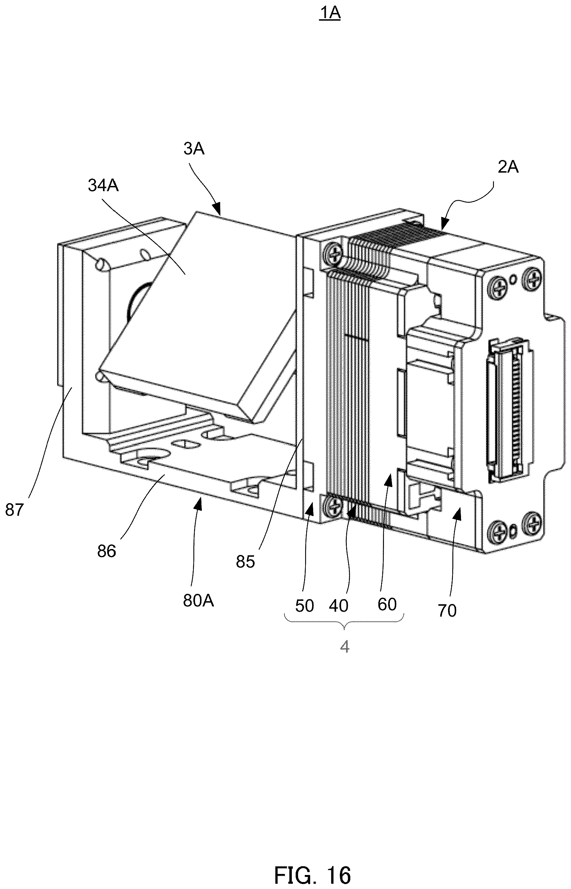

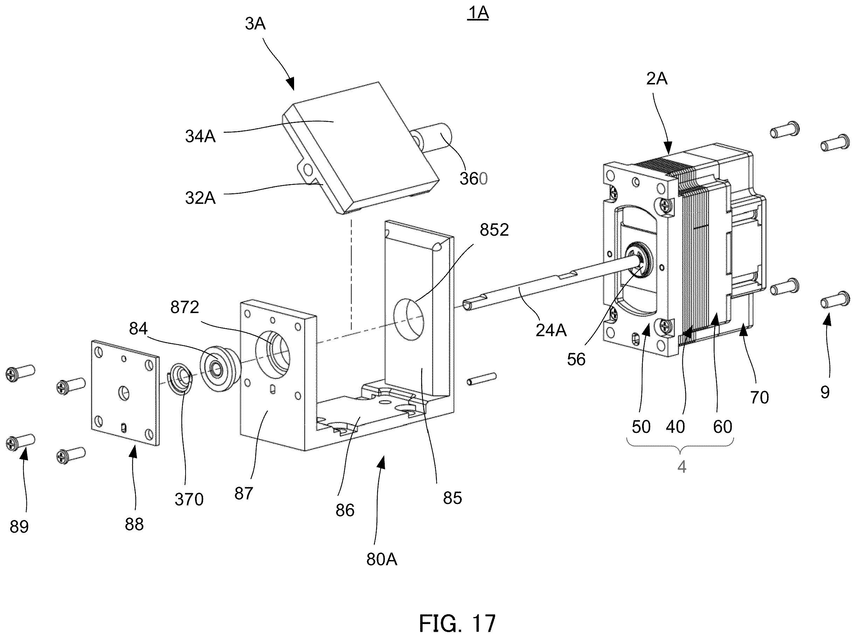

FIG. 16 is an external perspective view of a scanning device including a rotary reciprocating drive actuator of Embodiment 2, and FIG. 17 is an exploded perspective view of the scanning device including the rotary reciprocating drive actuator of Embodiment 2.

Rotary reciprocating drive actuator 1A has substantially the same function as rotary reciprocating drive actuator 1, and includes drive unit 2A, mirror part 3A, base part 80A, and angle detection unit 70.

Rotary reciprocating drive actuator 1A illustrated in FIGS. 16 and 17 differs from rotary reciprocating drive actuator 1 in that mirror part 3 (which is driven to rotate back and forth by the rotary reciprocating drive actuator) in rotary reciprocating drive actuator 1A is held between portions of base part 80A, not in a cantilevered manner.

In other words, rotary reciprocating drive actuator 1A can effectively support a mirror part having an increased size so as to be rotatable back and forth.

Specifically, drive unit 2A is different from drive unit 2 in the length of rotating shaft 24A, and the other configurations are the same. Accordingly, in the following, only the configuration of rotary reciprocating drive actuator 1A different from that of rotary reciprocating drive actuator 1 will be explained, and descriptions of other substantially the same configurations will be omitted.

Compared to drive unit 2, drive unit 2A includes rotating shaft 24A that is long enough to pass through wall part 87.

In drive unit 2A, unit main body 4 is attached and fixed to base part 80A including a pair of opposing wall parts 85 and 87. In drive unit 2A, rotating shaft 24A protruding from unit main body 4 bridges wall parts 85 and 87, and mirror part 3A is disposed between wall parts 85 and 87.

Unit main body 4 is fixed to the outer surface of wall part 85 (i.e., one of the pair of wall parts 85 and 87) of base part 80A, and rotating shaft 24A protruding from unit main body 4 passes through insertion hole 852 of wall part 85. Mirror part 3A fixed to rotating shaft 24A is disposed, together with spacer 360, between wall parts 85 and 87. The head of rotating shaft 24A is supported to be rotatable back and forth by wall part 87 via bearing 84 fitted in opening 872. In other words, bearing 84 and wall part 87 constitute a rotation support part.

Preload spring 370, together with bearing 84 fitting in opening 872, is disposed in opening 872 of wall part 87. Preload spring 370 applies a preload to bearing 84. Preload spring 370 is substantially the same as preload spring 37, so a description thereof will be omitted. Cover plate 88 that comes into contact with preload spring 370 is attached to the outer surface of wall part 87 via fastening members 89 in such a way that preload spring 370 is disposed as preload spring 370 applies a preload to bearing 84. Bottom plate part 86 of base part 80A is provided with fixing holes, notches and the like as a fixing means for fixing base part 80A and, by extension, rotary reciprocating drive actuator 1A.

Unlike in the case of a cantilever configuration, even when a movable object such as mirror part 3A becomes larger, the head of rotating shaft 24A thus can also be rotatably supported, and therefore, the behavior of the moving object can be stabilized and satisfactory shock resistance and vibration characteristics can be achieved. A ball bearing substantially the same as the above bearings such as bearings 54 and 64 is used as bearing 84, but bearing 84 is not limited thereto.

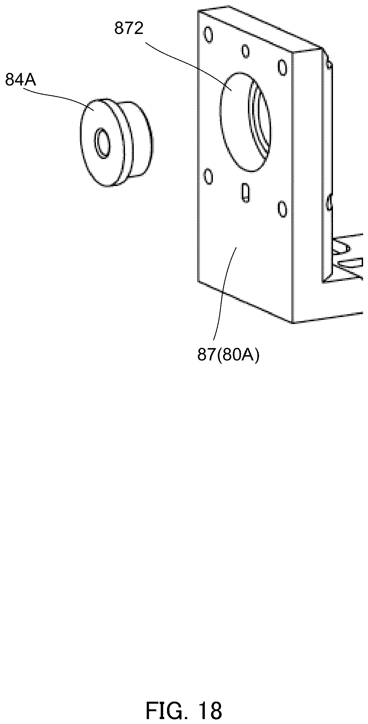

For example, bearing 84 may be plastic bushing, as in variation 1 illustrated in FIG. 18. The plastic bushing has almost the same effect as a ball bearing, and reduce the weight.

Embodiment 3

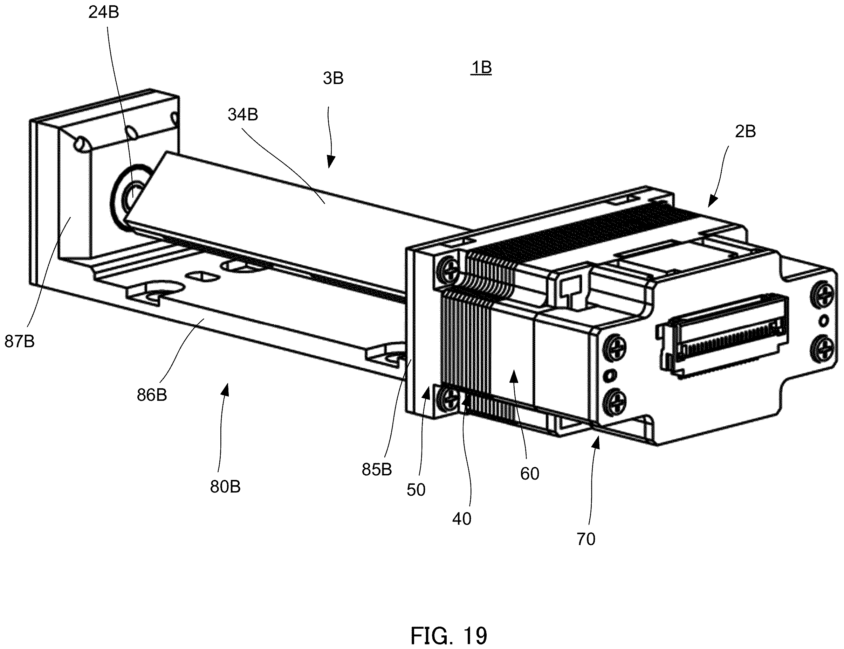

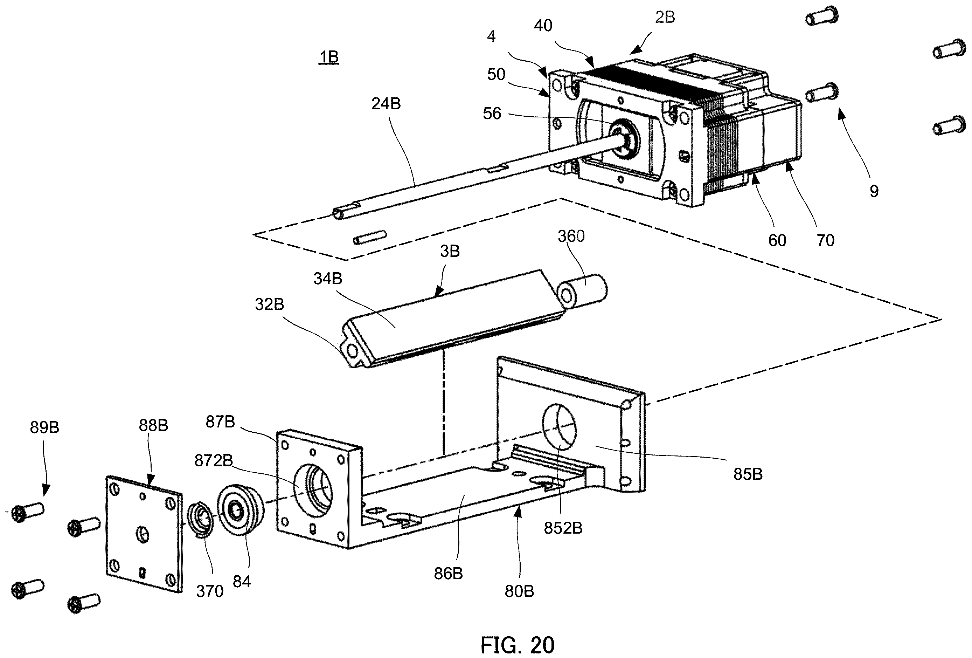

FIG. 19 is an external perspective view of a scanning device including a rotary reciprocating drive actuator of Embodiment 3, and FIG. 20 is an exploded perspective view of the scanning device including the rotary reciprocating drive actuator of Embodiment 3.

Rotary reciprocating drive actuator 1B has substantially the same function as rotary reciprocating drive actuator 1, and includes drive unit 2B, mirror part 3B, base part 80B, and angle detection unit 70.

Rotary reciprocating drive actuator 1B illustrated in FIGS. 19 and 20 differs from rotary reciprocating drive actuator 1 in that mirror part 3 (which is driven to rotate back and forth by the rotary reciprocating drive actuator) in rotary reciprocating drive actuator 1B is held between portions of base part 80B, not in a cantilevered manner.

Rotary reciprocating drive actuator 1B can effectively support a mirror part having an increased size so as to be rotatable back and forth.

Specifically, drive unit 2B is different from drive unit 2 in the length of rotating shaft 24B, and the other configurations are the same. In the following, only the configuration of rotary reciprocating drive actuator 1B different from that of rotary reciprocating drive actuator 1 will be explained, and descriptions of other substantially the same configurations will be omitted.

Compared to drive unit 2, drive unit 2B includes rotating shaft 24B that is long enough to pass between wall parts 85B and 87B of base part 80B, and mirror part 3B larger than mirror part 3 is attached to this rotating shaft 24B.

In drive unit 2B, unit main body 4B is attached and fixed to base part 80B including a pair of opposing wall parts 85B and 87B. In drive unit 2B, rotating shaft 24B protruding from unit main body 4B bridges wall parts 85B and 87B, and mirror part 3B is disposed between wall parts 85B and 87B.

Unit main body 4B is fixed to the outer surface of wall part 85B of base part 80B, and rotating shaft 24B protruding from unit main body 4B is inserted into insertion hole 852B of wall part 85B. Mirror part 3B fixed to rotating shaft 24B is disposed, together with spacer 360, between wall parts 85B and 87B. The head of rotating shaft 24B is supported to be rotatable back and forth by wall part 87B via bearing 84 fitted in opening 872B.

Preload spring 370, together with bearing 84 fitting in opening 872B, is disposed in opening 872B of wall part 87B. Preload spring 370 applies a preload to bearing 84. Preload spring 370 is substantially the same as preload spring 370, so a description thereof will be omitted. Cover plate 88B that comes into contact with preload spring 370 is attached to the outer surface of wall part 87B via fastening members 89B in such a way that preload spring 370 is disposed as preload spring 370 applies a preload to bearing 84.

Bottom plate part 86B of base part 80B is provided with fixing holes, notches and the like as a fixing means for fixing base part 80B and, by extension, rotary reciprocating drive actuator 1B.

Unlike in the case of a cantilever configuration, even when a movable object such as mirror part 3B becomes larger, the head of rotating shaft 24B thus can also be rotatably supported, and therefore, the behavior of the moving object can be stabilized and satisfactory shock resistance and vibration characteristics can be achieved.

Ball bearings are used as bearings 54 and 64 in each embodiment, but the bearings are not limited to a ball bearing. For example, bearing 84 may be plastic bushing, as in variation 1 illustrated in FIG. 18. The plastic bushing has almost the same effect as a ball bearing, and reduce the weight.

In addition, bearing 84 in Embodiment 3 may also be plastic bushing in place of a ball bearing.

FIG. 21 illustrates a main part configuration of scanner system 100 using rotary reciprocating drive actuator 1.

Scanner system 100 includes laser emitting unit (light emitting part) 101, laser control unit 102, drive signal supply unit 103, and position control signal calculation unit 104, in addition to rotary reciprocating drive actuator 1.

Laser emitting unit 101 includes, for example, a laser diode (LD) serving as a light source and a lens system for converging a laser beam output from the light source. Laser control unit 102 controls laser emitting unit 101. The laser beam emitted from laser emitting unit 101 is incident on mirror 34 of rotary reciprocating drive actuator 1.

Position control signal calculation unit 104 generates and outputs a drive signal for controlling rotating shaft 24 (mirror 34) to be positioned at a target angle position by referring to the angle position of rotating shaft 24 (mirror 34) acquired by angle detection unit 70 and the target angle position. For example, position control signal calculation unit 104 generates a position control signal based on the acquired angle position of rotating shaft 24 (mirror 34) and a signal indicating the target angular position converted by using sawtooth waveform data and the like stored in a waveform memory (not illustrated). Position control signal calculation unit 104 outputs the generated position control signal to drive signal supply unit 103

Drive signal supply unit 103 supplies a drive signal to coils 461 and 462 of rotary reciprocating drive actuator 1 based on the position control signal in such a way that rotating shaft 24 (mirror 34) is positioned to be at a desired angle position. As a result, scanner system 100 can emit scanning light from rotary reciprocating drive actuator 1 to a predetermined scanning region.

Summary

As described above, rotary reciprocating drive actuator 1 according to the present embodiment includes movable body 20 including rotating shaft (shaft part) 24 to which a mirror part (movable object) is connected and magnet 36 fixed to the outer periphery of rotating shaft 24. Movable body 20 is rotatable back and forth (capable of rotating in a reciprocating manner) around rotating shaft 24. Magnet 36 is a ring-shaped magnet in which S pole 362 and N pole 361 are alternately disposed in the circumferential direction on the outer peripheral surface.

Rotary reciprocating drive actuator 1 also includes unit main body 4 configured to rotate movable body 20 back and forth by interaction with magnet 36. Unit main body 4 includes core assembly 40 that includes core body K and a plurality of coils 461 and 462. Core body K includes a plurality (pair) of magnetic poles 412 and 414, and the plurality of coils 461 and 462 generate magnetic flux in core body K when the coils are energized. In unit main body 4, core assembly 40 is disposed in such a way that the plurality of magnetic poles 412 and 414 face the outer periphery of magnet 36, and the plurality of coils 461 and 462 are in parallel with each other. The plurality of magnetic poles 412 and 414 extend on one straight line (extend on the same straight line) on both sides of magnet 36 in the radial direction of rotating shaft 24.

Coils 461 and 462 (with magnet 36 therebetween in the radial direction of magnet 36) are disposed with their axes aligned on one axis. Core body K constitutes a magnetic path part that connects magnetic poles 412 and 414 with each other. The magnetic path part is a portion (surrounding part) of core body K (second core 43 and third core 44) surrounding coils 461 and 462 and magnet 36. In addition, in core body K, angle position holding part 48 (which is a biasing part, for example, magnet, rotation angle position holding part, or biasing part) is provided in a notched portion (recess 480) of the surrounding part.

With this configuration, when increasing the magnetic path length, it is possible to create a design in which the length can be increased only in one axis direction and the length in the direction orthogonal to the one axis direction can be reduced. In other words, when the direction orthogonal to the one axis direction is set to be the height direction, the height of the product can be reduced.

That is, in rotary reciprocating drive actuator 1, when, in addition to high amplitude drive, size reduction (also height reduction in some cases) of a product is desired, for example, even when coils 461 and 462 are arranged side by side on one side to reduce the height, this configuration can be suitably adopted. In other words, unlike conventional methods, shortening the bobbin insertion direction (the one axis direction) would not reduce the number of turns, and shortening the direction orthogonal to the bobbin insertion direction would not make the magnetic path cross section of the core body (which forms the magnetic circuit) smaller or narrower.

As described above, rotary reciprocating drive actuator 1 can reduce its size to save space for installation, has impact resistance and vibration resistance, and can drive a movable object with high amplitude in a more stable state through the shaft part.

In addition, rotary reciprocating drive actuator 1 includes plurality (pair in the present embodiment) of angle position holding parts (rotation angle position holding part) 48 that are a magnets (permanent magnet) with respect to magnet 36 on the movable body side. By using the plurality of angle position holding parts 48, it is possible to more accurately position the movable body to the reference position for driving the movable body to rotate back and forth, and to drive the movable body back and forth from that position, thereby reliably driving the movable body back and forth with a large torque.

Further, the movable object is mirror part 3 (particularly mirror 34) that reflects scanning light. Rotary reciprocating drive actuator 1 thus can be used for a scanner that performs optical scanning.

In core assembly 40 of the present embodiment, second core 43 and third core have exactly the same shape, and core assembly 40 is constructed by using a pair of these cores by disposing the cores symmetrically, and therefore, by reducing the number of parts, assembly becomes easier and manufacturing costs can be reduced.

In addition, core assembly 40 includes recess 480 (for attaching a magnet serving as angle position holding part 48) whose width matches that of the magnet. For attaching angle position holding part 48 to core body K (or second core 43 and third core 44), there is no need to use a jig when positioning that would need a jig is required, and the parts can be easily installed and the assembly work can be simplified.

In the above, the invention made by the present inventor has been specifically described based on the embodiments, but the present invention is not limited to the above embodiments, and can be modified without departing from the gist thereof.

For example, in the embodiments, the movable object is mirror part 3, but the movable object is not limited to the mirror part. The movable object may be, for example, an imaging device such as a camera.

Further, for example, in the embodiments, rotary reciprocating drive actuator 1 is driven resonantly, but the present invention can also be applied to a rotary reciprocating drive actuator 1 that is driven non-resonantly.

Industrial Applicability

The present invention is suitable for, for example, LiDAR devices, scanner systems, and the like.

Reference Signs List

1, 1A, 1B Rotary reciprocating drive actuator
2, 2A, 2B Drive unit
3, 3A, 3B Mirror part
4, 4A, 4B Unit main body
9, 89, 89B, 91, 93, 99 Fastening member
20 Movable body
24, 24A, 24B Rotating shaft (shaft part)
27 Stopper
32, 32A, 32B Mirror holder

34, 34A, 34B Mirror
36 Magnet
37, 370 Preload spring
37A Coil spring
37B Wave spring
40 Core assembly
42 First core
43 Second core (same-shaped core)
44 Third core (same-shaped core)
45 Coil body
47 Bobbin
48, 48AAngle position holding part (biasing part)
50 Bottom cover (first shaft support)
53, 63 Shaft opening
54, 64, 84 Bearing
56 Retaining ring
60 Top cover (second shaft support)
62 Top cover main body
65 Terminal opening
66 Relay board
67 Receiving part
70 Angle detection unit
72 Sensor cover
73 Through hole
74 Encoder disk
76 Encoder wheel
78 Sensor board
80 Bracket
80A, 80B Base part
85, 85B, 87, 87B Wall part
86, 86B Bottom plate part
88, 88B Cover plate
100 Scanner system
101 Laser emitting unit
102 Laser control unit
103 Drive signal supply unit
104 Position control signal calculation unit
360 Spacer
361 N pole (magnetic pole)
362 S pole (magnetic pole)
363 Magnetic pole switching part
404, 404-2, 440 Positioning hole
404-1 Idle hole (elongated hole)
406 Fixing hole
412, 414 Magnetic pole
415 Rod-shaped part
416 Orthogonal part
417 Rod-shaped bridge part
418 Rod-shaped connection part
422 Rectangular opening
440 Positioning hole
461, 462 Coil
472 Metal terminal
480 Recess
482 Corner
500 Device frame
502, 503 Attached wall
506 Attachment hole

806 Fixing hole
807 Positioning hole
508 Positioning protrusion
810 Positioning jig
852, 852B Insertion hole
872, 872B Opening
902, 903 Positioning pin
4722 Fillet (solder)
K Coil body

**Claims**

1.  A rotary reciprocating drive actuator, comprising:

    a movable body (20) that includes a shaft part (24) and is capable of reciprocating rotation around the shaft part (24), wherein a magnet (36) is fixed on an outer periphery of the shaft part; and
    a unit main body (4) that causes the reciprocating rotation of the movable body (20) by interaction with the magnet (36), wherein
    the unit main body (4) includes

    a core body (K) that includes a pair of magnetic poles (412, 414) and a magnetic path part, the pair of magnetic poles (412, 414) extending on one straight line on both sides of the magnet (36) in a radial direction of the shaft part (24), the magnetic path part surrounding the pair of magnetic poles (412, 414) and the magnet (36) and connecting the pair of magnetic poles (412, 414) to each other,
    a pair of coil bodies (45) that are respectively wound around the pair of magnetic poles (412, 414) and cause the interaction by energizing of the coil bodies (45), and
    a biasing part (48) disposed in a recess (480) formed in the magnetic path part at a position between the magnetic poles (412, 414) in a circumferential direction of the shaft part (24), the biasing part (48) biasing the movable body (20) toward an initial position of the reciprocating rotation.

2.  The rotary reciprocating drive actuator according to claim 1, wherein:

    the core body (K) is composed of a plurality of divided bodies (41, 42, 43) , and
    the plurality of divided bodies (41, 42, 43) include a plurality of same-shaped cores (42, 43) disposed symmetrically about the magnet (36), having identical shapes, and each including one of the pair of magnetic poles (412, 414) and a portion of the magnetic path part.

3.  The rotary reciprocating drive actuator according to claim 2, wherein
    the divided bodies are divided at a position other than that of the recess (480).

4.  The rotary reciprocating drive actuator according to claim 1, wherein
    the recess (480) has a width that matches a width of the biasing part (48).

5.  The rotary reciprocating drive actuator according to claim 1, further comprising:
    another biasing part that is disposed to face the biasing part (48) with the magnet (36) therebetween and has a function identical to that of the biasing part (48).

6.  The rotary reciprocating drive actuator according to claim 4, wherein
    the magnet (36) includes a plurality of magnetic pole switching parts (363) that are symmetrically disposed in the circumferential direction, the plurality of magnetic pole switching parts (363) respectively facing the plurality of magnetic poles (412, 414) when the magnet (36) is located at the initial position.

7.  The rotary reciprocating drive actuator according to claim 1, wherein
    the magnet (36) is magnetized into two poles.

8.  The rotary reciprocating drive actuator according to claim 1, wherein
    the biasing part (48) is a magnet.

9. The rotary reciprocating drive actuator according to claim 5, wherein the biasing part (48) is a permanent magnet, and the other biasing part is a permanent magnet (48) or a convex magnetic pole (48A) integrally formed with the magnetic path part.

10. The rotary reciprocating drive actuator according to claim 1, wherein
the unit main body (4) includes a pair of shaft supports (50, 60) disposed with the core body (K) between the shaft supports in an axial direction of the shaft part, the pair of shaft supports covering the core body, the coil bodies, the magnet, and the biasing part from both sides in the axial direction and rotatably supporting the shaft part passing through the unit main body.

11. The rotary reciprocating drive actuator according to claim 1, wherein
a movable object (3) is fixed to the shaft part (24), and an end of the shaft part (24) on a side of the movable object (3) is rotatably supported by a rotation support part (84, 87) of the unit main body (4).

12. The rotary reciprocating drive actuator according to claim 10, wherein
the pair of shaft supports (50, 60) have electrical conductivity.

FIG. 1

EP 4 503 410 A1

FIG. 2

FIG. 3

FIG. 4

<u>2</u>

FIG. 5

2

FIG. 6

FIG. 7

EP 4 503 410 A1

FIG. 8

FIG. 9

43    48    480

FIG. 10A

43

482

412    480

48

FIG. 10B

36

FIG. 11

FIG. 12A

FIG. 12B

FIG. 12C

FIG. 13

FIG. 14

FIG. 15

<u>1A</u>

FIG. 16

FIG. 17

84A

872

87(80A)

FIG. 18

FIG. 19

FIG. 20

<u>100</u>

FIG. 21

# EUROPEAN SEARCH REPORT

**EUROPEAN SEARCH REPORT**

**Application Number**

EP 24 19 1536

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 5 275 141 A (TSUNODA AKIRA [JP] ET AL)<br>4 January 1994 (1994-01-04)<br>* column 2, line 48 - column 4, line 65;<br>figure 2 *<br>- - - - - | 1,2,4,5,<br>7-12<br>3,6 | INV.<br>H02K26/00<br>H02K33/16 |
| A | US 5 708 406 A (TSUNODA AKIRA [JP] ET AL)<br>13 January 1998 (1998-01-13)<br>* column 6, line 53 - column 7, line 60;<br>figure 7 *<br>- - - - - | 1-12 | |
| A | US 2013/076194 A1 (BENNER JR WILLIAM R<br>[US]) 28 March 2013 (2013-03-28)<br>* paragraph [0003] - paragraph [0014];<br>figure 3 *<br>* paragraph [0044] - paragraph [0049];<br>figures 6a, 6b, 7 *<br>- - - - - | 1-12 | |

TECHNICAL FIELDS
SEARCHED (IPC)

H02K

The present search report has been drawn up for all claims

| Place of search | Date of completion of the search | Examiner |
|---|---|---|
| The Hague | 3 December 2024 | Contreras Sampayo, J |

EPO FORM 1503 03.82 (P04C01)

## ANNEX TO THE EUROPEAN SEARCH REPORT
## ON EUROPEAN PATENT APPLICATION NO.

EP 24 19 1536

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2024

| Patent document cited in search report | | Publication date | Patent family member(s) | | Publication date |
|---|---|---|---|---|---|
| US 5275141 | A | 04-01-1994 | NONE | | |
| US 5708406 | A | 13-01-1998 | JP | H08322226 A | 03-12-1996 |
| | | | US | 5708406 A | 13-01-1998 |
| US 2013076194 | A1 | 28-03-2013 | CN | 103051075 A | 17-04-2013 |
| | | | CN | 103095000 A | 08-05-2013 |
| | | | US | 2013076185 A1 | 28-03-2013 |
| | | | US | 2013076194 A1 | 28-03-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4727509 B